Europäisches Patentamt

European Patent Office

Office européen des brevets

(19)

(11) Numéro de publication: **0 100 276**
**B1**

(12) **FASCICULE DE BREVET EUROPEEN**

(45) Date de publication du fascicule du brevet: **20.11.86**

(21) Numéro de dépôt: **83401504.2**

(22) Date de dépôt: **22.07.83**

(51) Int. Cl.⁴: **A 47 C 5/12,** A 47 C 7/26, B 29 C 39/10

(54) **Procédé pour la réalisation d'un élément de siège par le moulage d'un cadre sur une garniture et élément de siège obtenu par ledit procédé.**

(30) Priorité: **22.07.82 FR 8212820**
**14.09.82 FR 8215502**

(43) Date de publication de la demande:
**08.02.84 Bulletin 84/06**

(45) Mention de la délivrance du brevet:
**20.11.86 Bulletin 86/47**

(84) Etats contractants désignés:
**AT BE CH DE GB IT LI LU NL SE**

(56) Documents cités:
**FR-A-2 393 663**
**FR-A-2 447 167**

(73) Titulaire: **ETABLISSEMENTS M. DURET & FILS Sociëté Anonyme dite:**
**59, rue Lemarrois**
**F-27800 Brionne (FR)**

(72) Inventeur: **Danton, Jean-Louis**
**8, rue Gambetta**
**F-92100 Boulogne (FR)**

(74) Mandataire: **Brot, Philippe et al**
**CABINET BROT et JOLLY 83, rue d'Amsterdam**
**F-75008 Paris (FR)**

Courier Press, Leamington Spa, England.

## Description

La présente invention concerne un procédé pour la réalisation d'un élément de siège ou analogue utilisant une garniture résistant à la lacération, du type de celle décrite dans la demande de brevet français n° 79 02 063 déposée le 26 Janvier 1979 au nom de la Demanderesse. Elle a également pour objet l'élément de siège obtenu par ledit procédé.

On rappelle que l'élément de garniture décrit dans la demande de brevet français déjà cité fait intervenir au moins trois éléments bien distincts à savoir:

1) Une couche de couverture en matière plastique compacte, relativement épaisse, qui, en raison de son épaisseur et de sa compacité, constitue un premier obstacle à la lacération. Cette couche de couverture, qui n'est soumise à aucun effort quelconque en tension, présente une faible élasticité dans son plan mais une bonne flexibilité.

2) Un réseau, formé d'une nappe continue de ressorts métalliques, en spirale (hélicoïdaux) dont les axes sont parallèles à la couche de couverture en matière plastique compacte, et dont les spires sont entremélées les unes avec les autres, de manière à obtenir, vue en plan, une structure en forme de damier, à mailles très peu extensibles, permettant de stopper la pénétration et la progression d'un objet tranchant (les ressorts ne pouvant pas s'écarter pour laisser le passage dudit objet), les spires desdits ressorts venant, d'un côté, sensiblement affleurer contre la face inférieure de la couche de couverture.

3) Une couche intermédiaire de liaison entre la couche de couverture et la nappe de ressorts, cette couche étant réalisée en une mousse de matière plastique d'épaisseur inférieure au diamètre des spires des ressorts de ladite nappe et adhérant, d'un côté sur la face inférieure de la couche de couverture en matière plastique compacte et venant en partie enrober les spires de la nappe de ressorts (sur une fraction de l'épaisseur de la nappe de ressorts).

Pour réaliser un élément de siège à l'aide d'une telle garniture, il est nécessaire de découper la garniture aux dimensions puis de la fixer, par au moins une partie de sa périphérie, à la structure rigide du siège ou sur un élément rigide tel qu'un cadre destiné à être rapporté sur la structure du siège.

On constate que, dans le cas de l'élément de garniture précédemment décrit, cette fixation s'évère, être une opération délicate en raison de la partie de la nappe de ressorts émergeant, en saillie, de la couche intermédiaire en mousse de matière plastique.

L'emploi des procédés usuels pour assurer cette fixation tels que pincement, clouage, vissage ou même soudure de la nappe de ressorts sur un cadre périphérique présente de nombreux inconvénients, à savoir:

— l'emploi d'une main-d'oeuvre relativement importante,
— des coûts de fabrication relativement élevés,
— la difficulté pour parvenir à la réalisation d'un siège de structure légère et présentant un aspect esthétique agréable.

L'invention a donc pour but de supprimer ces inconvénients. A cet effet, elle propose un procédé consistant à mouler, sur la périphérie de la garniture, un cadre rigide en une matière plastique convenablement choisie. Il est clair qu'un tel moulage implique de résoudre le problème posé par la partie de la nappe de ressorts dépassant hors de la couche intermédiaire. En effet, en raison des ressorts, il n'est guère possible de concevoir un moule venant s'assembler, de façon étanche, sur la garniture. La matière de moulage s'écoulera donc dans l'espace libre situé au niveau de la nappe de ressorts.

Pour surmonter cet obstacle, le procédé selon l'invention comprend donc les opérations suivantes:

— La découpe de la garniture,
— Le dépôt, à une légère distance de la bordure périphérique de la garniture, du côté où émerge la nappe de ressorts, d'un cordon en matière plastique possédant des propriétés d'élasticité, ce cordon venant adhérer sur la couche intermédiaire en mousse de matière plastique, et venant enrober, en la dépassant, la partie de la nappe de ressorts sortant de ladite couche intermédiaire. Ce cordon est notamment destiné à servir d'élément d'étanchéité lors du moulage du cadre rigide.
— La mise en place de la bordure périphérique de la garniture dans la cavité d'un moule périphérique, l'étanchéité entre la garniture et le moule étant assurée, d'un côté par le contact de la paroi du moule avec la face extérieure de la garniture, et, de l'autre côté, par le contact de la paroi du moule sur le cordon d'étanchéité, et
— Le coulage ou l'injection d'une matière plastique convenablement choisie à l'intérieur du moule.

Selon une autre caractéristique de l'invention, on exerce sur la garniture, au cours de la phase de mise en place et de moulage, une contrainte en vue de lui conférer, en jouant sur sa flexibilité, une forme galbée. Cette forme galbée demeurera ensuite après la prise de la matière plastique constituant la cadre.

Afin d'obtenir un bon compromis, résistance à la lacération, résistance à l'usure, flexibilité et confort, l'invention propose d'utiliser pour la réalisation du réseau, des ressorts présentant un diamètre de fils de l'ordre de 0,5 à 1,5 mm et un diamètre de spires de 10 à 20 mm.

Par ailleurs, les spires des ressorts se trouveront, de préférence, enrobées dans la couche intermédiaire en mousse de matière plastique sur

$\frac{1}{3}$ à $\frac{1}{2}$ de leur diamètre. En-dessous de 50%, la nappe aura tendance à se décoller (arrachement de la mousse de matière plastique). Au-dessus de 80%, les fils des ressorts risquent de détériorer la mousse.

Un avantage de la garniture précédemment décrite réside en ce qu'elle combine, d'une façon très particulière, la souplesse de la couche de couverture en matière plastique compacte et la flexibilité de la nappe de ressorts.

En effet, si l'on provoque une flexion de la garniture, celle-ci opposera une force de rappel qui tendra à la ramener à sa position initiale, cette force de rappel consistant en la résultante de la flexibilité de la couche de couverture en matière plastique et de l'élasticité de la partie des spires des ressorts qui ne se trouve pas enrobée dans la couche intermédiaire en mousse de matière plastique. Cette propriété présente un avantage important, à savoir: si l'on pratique dans la couche de couverture une fente, par exemple à l'aide d'un couteau, cette fente tendra à se refermer grâce à la flexibilité de l'ensemble de la garniture et demeurera, de ce fait, pratiquement invisible.

Dans sa version proposée dans la demande de brevet français déjà citée, la nappe de ressorts est constituée par une pluralité de ressorts hélicoïdaux à axes parallèles disposés côte-à-côte, et dont les spires de chacun des ressorts se trouvent entremêlées avec les spires des deux ressorts qui lui sont adjacents. L'entremêlement de ces spires est obtenu en faisant tourner chacun des ressorts autour de son axe de manière à ce qu'il vienne s'engager dans les spires des ressorts qui lui sont adjacents.

Toutefois, selon un mode d'exécution avantageux de l'invention, la nappe de ressorts peut être formée par un entremêlement de deux nappes de ressorts, telles que celle précédemment décrite, les ressorts de la première nappe étant axés perpendiculairement aux ressorts de la seconde nappe. Cette solution présente notamment les avantages suivantes:

— Elle permet d'obtenir une plus grande densité de spires de ressorts à proximité de la face inférieure de la couche de couverture, ces spires s'étendant dans deux directions perpendiculaires et constituant une sorte de damier en relief. On obtient donc ainsi une meilleure résistance à la lacération et à la pénétration d'un objet tranchant.

— Elle permet d'obtenir une nappe dans laquelle les ressorts se trouvent auto-maintenus en position sans nécessiter l'utilisation d'élément extérieurs, ce qui n'est pas le cas dans la solution précédente, dans laquelle les ressorts peuvent se déplacer légèrement les uns vers les autres (variations des écarts axiaux).

— Elle permet d'obtenir une meilleure homogénéité de la flexibilité de l'ensemble de la nappe de ressorts (même flexibilité dans le sens des axes des deux nappes de ressorts entremêlés).

Selon un autre mode d'exécution de l'invention l'élément de garniture comprend, en outre, entre la couche de couverture et la couche de liaison en mousse de matière plastique, une nappe intercalaire de quelques dixièmes de mm, par exemple de 6/10 ème, en tissu de fibres de verre. Cette couche intermédiaire sur laquelle viennent porter les sommets des spires de ressorts a plusieurs fonctions:

— Elle facilite la réalisation de l'élément de couverture, notamment dans le cas où la matière plastique de la couche de couverture et de la couche de liaison est réalisée en élastomère de silicones ou en polyéthylène.
— Elle permet d'homogénéiser les contraintes mécaniques entre la nappe de ressorts et la couche de couverture.
— Elle permet d'éviter un effet de mosaïque dû à la nappe de ressorts et visible à la surface extérieure de la couche de couverture.
— Elle permet d'augmenter la résistance au feu de l'ensemble de l'élément de couverture.

L'élément de garniture selon l'invention peut en outre comprendre un revêtement en tissu, par exemple en laine, recouvrant la face supérieure de la couche de couverture.

Dans le cas où ce tissu est du genre velours, il présente, en plus du confort, l'avantage de rendre une fente pratiquée sur la couche de couverture totalement invisible (les fibres du velours masquant alors entièrement la fente).

Il convient de noter que la couche de couverture et la couche de liaison sont, de préférence, réalisées en matière plastique de même nature, par exemple à base de chlorure de polyvinyle (PVC), d'élastomère de silicones ou de polyéthylène.

A titre d'exemple, dans le cas où la matière plastique est à base de PVC, cette matière plastique peut comprendre:

— du PVC,
— un plastifiant usuel,
— des charges minérales,
— un agent usuel de résistance au feu,
— un stabilisant thermique permettant d'éviter la décomposition du PVC à la température de coulage,
— et pour ce qui concerne la couche de liaison en mousse de matière plastique, un agent d'expansion pouvant consister en de l'azodicarbonamide à raison de 2 parties d'agent d'expansion pour 100 parties de résine PVC.

Dans le cas où la matière plastique est un élastomère de silicone:

— la couche de couverture pourra consister en du Silastic Q 39 591 de la firme US Dow Corning, et
— la couche de liaison en mousse de matière plastique pourra consister en du Silastic GP 590 Dow Corning avec, comme agent d'expansion, de l'azodicarbonamide. Il convient de noter à ce sujet que, dans ce cas, le pourcentage d'agent d'expansion ne devra pas dépasser 2% car, au-delà de ce pourcentage, il devient un inhibiteur de vulcanisation de l'élastomère de silicone (Il sera de préférence de 1,25%).

Selon une autre caractéristique de l'invention, la réalisation de la susdite garniture comprend les étapes suivantes:

1) On coule à température ambiante, sur un moule, la couche compacte de couverture, par exemple en PVC, la face de moulage pouvant présenter en relief un négatif d'un dessin à obtenir (grainage du moule).

2) On prépolymérise la couche de couverture dans un four, à une température de l'ordre de 180°C pendant une durée de l'ordre de 3 à 5 mn puis on laisse refroidir de manière à obtenir un abaissement de la température de la matière d'environ 50°C, par exemple de 120° à 70°C.

3) On coule ensuite, à la température ambiante la couche de liaison, par exemple avec un mélange de PVC et d'agent d'expansion.

4) On pose sur la couche de liaison liquide la nappe continue de ressorts. La nappe de ressorts s'enfonce alors dans la couche de liaison jusqu'à ce qu'elle atteigne la couche de couverture qui a été prépolymérisée et qui est, de ce fait, plus dure.

5) On polymérise ensuite les deux couches de matière plastique dans un four à une température de 180° et pendant une durée d'environ 25 mn.

6) On défourne et on laisse refroidir à température ambiante avant de manipuler la garniture.

7) On découpe ensuite les éléments de garniture aux formes et aux dimensions requises.

Il convient de noter que dans la première étape du mode d'exécution précédemment décrit, la face de moulage du moule peut être initialement recouverte d'un tissu, réalisé à l'aide d'une matière naturelle ou synthétique non altérable par la température de polymérisation. Dans ce cas, on obtient des éléments de garniture recouverts de tissu.

Selon un deuxième mode d'exécution, la fabrication de la garniture comprend les étapes suivantes:

1) On coule à température ambiante la couche de couverture, par exemple en PVC ou en élastomère de silicones, la face de moulage du moule pouvant présenter en relief le négatif d'un dessin à obtenir, ou être recouverte d'un tissu.

2) On dispose sur cette couche de couverture un tissu intercalaire en fibre de verre.

3) On coule à froid la couche de liaison en matière plastique, (résine mélangée à de l'agent d'expansion).

4) On pose sur cette couche de liaison liquide la nappe continue de ressorts. La nappe de ressorts d'enfonce alors dans la couche de liaison jusqu'à ce qu'elle atteigne le tissu intercalaire en fibres de verre.

5) On polymérise ensuite les deux couches de matière plastique dans un four à une température de 180° et pendant une durée d'environ 25 mn.

6) On défourne et on laisse refroidir à température ambiante avant de manipuler la garniture.

7) On découpe ensuite les éléments de garniture aux formes et aux dimensions requises.

En ce qui concerne le choix de la matière plastique utilisée, il convient de noter que:

— la solution PVC présente l'avantage d'être d'un coût relativement faible. En outre, on peut obtenir une dureté Shore de l'ordre de 80. Par contre, l'inconvénient de cette solution réside dans le fait que l'on ne peut pas résoudre le problème des dégagements gazeux nocifs lors d'un incendie;

— la solution élastomère de silicones présente l'avantage d'une bien meilleure tenue au feu (classement, émission de fumée, toxicité). Toutefois, son coût est plus élevé et sa dureté maximum, de l'ordre de 50 Shore, est inférieure à celle du PVC.

D'une manière avantageuse, la forme galbée peut être obtenue en maintenant la couverture plaquée, par exemple par aspiration sur une matrice présentant la forme désirée.

Bien entendu, l'invention concerne également l'élément de siège ou analogue, obtenu par le procédé précédemment décrit.

Des modes de réalisation de l'invention seront décrits ci-après, à titre d'exemples non limitatifs, avec référence aux dessins annexés dans lesquels:

— La figure 1 est une coupe transversale schématique d'un élément de garniture pouvant convenir dans le procédé selon l'invention, dans lequel la nappe de ressorts est constituée par une pluralité de ressorts hélicoïdaux à axes parallèles;

— La figure 2 est une vue schématique, en perspective éclatée, de l'élément représenté figure 1;

— La figure 3 représente, en vue de dessus, une nappe de ressorts constituée par un entremêlement de deux nappes de ressorts à axe perpendiculaires;

— La figure 4 est une vue de dessus permettant d'illustrer le mode de réalisation (entremêlement) de la nappe représentée figure 3.

— Les figures 5 à 8, représentent schématiquement les différentes étapes du procédé pour la réalisation d'un élément de siège selon l'invention;

— La figure 9 représente, en perspective, un élément de siège obtenu par ledit procédé;

— Les figures 10 et 11 représentent une partie découpée de l'élément de siège représenté figure 9, cette partie étant vue de dessus (figure 10), et vue de dessous (figure 11).

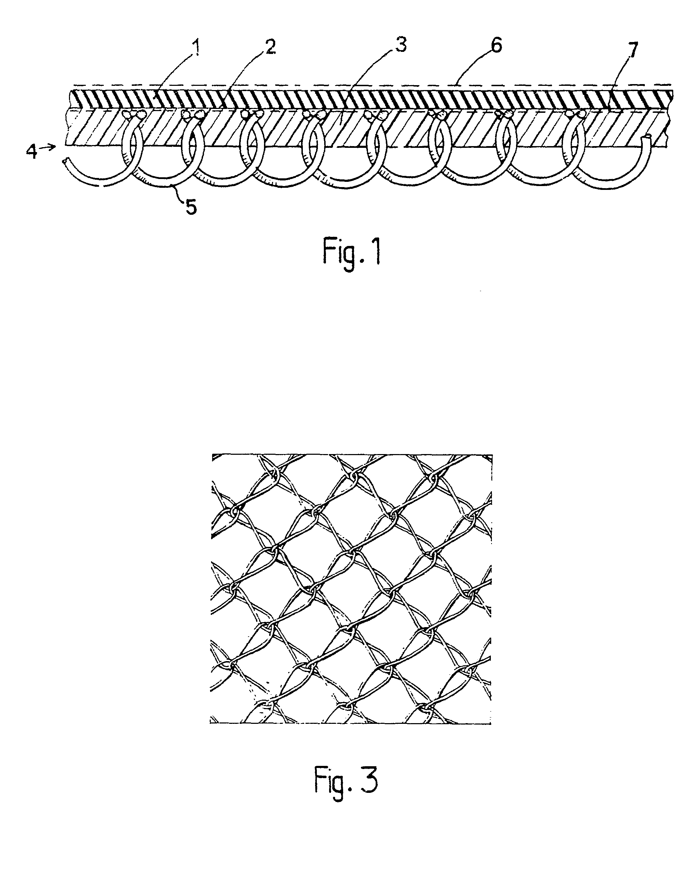

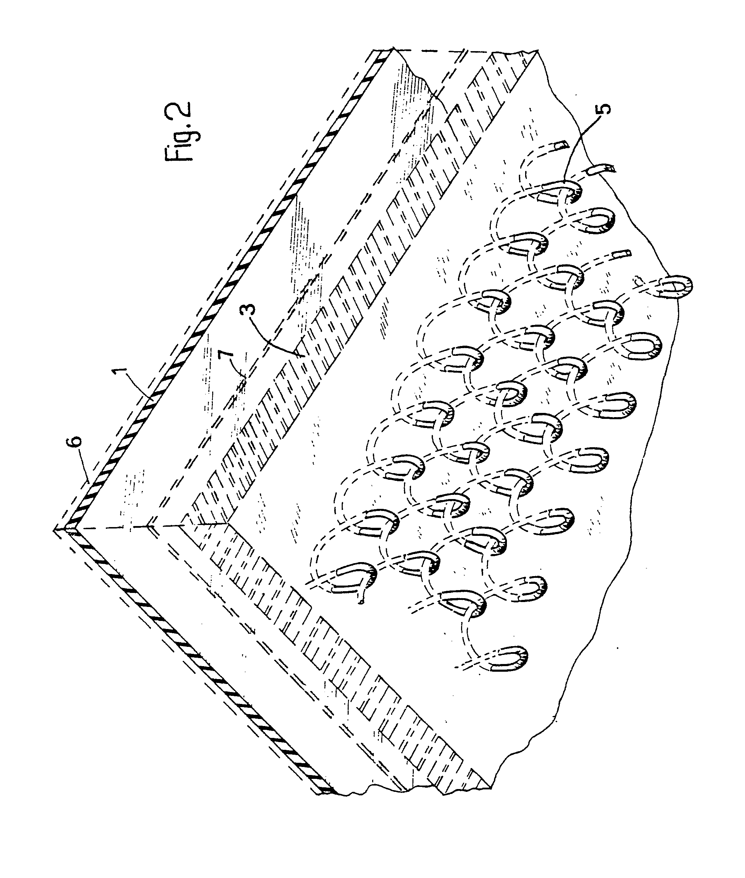

L'élément de garniture représenté figures 1 et 2 comprend une couche de couverture 1 en matière plastique compacte telle que des élastomères de silicones, du polyéthylène, et du chlorure de polyvinyle compact (PVC), par exemple de densité de l'ordre de 1,18 à 1,30, de dureté Shore de 40 à 98, cette couche de couverture 1 étant relativement épaisse, par exemple de l'ordre de 5 mm.

La face inférieure 2 de cette couche de couverture 1 se trouve solidarisée, au moyen d'une couche intermédiaire en mousse de la même matière plastique 3, à un réseau 4 formé par une nappe continue de ressorts métalliques 5 en spirale, à axes parallèles entre eux et à la couche de couverture 1.

Les spires de ces ressorts 5 se trouvent entremêlées les unes avec les autres, comme précédemment décrit, et affleurent, d'un côté, contre la face inférieure de la couche de couverture 1.

Ces ressorts 5 peuvent être réalisés par exemple à l'aide de fils d'acier de diamètre de l'ordre de 5 à 15/10ème de mm. Le diamètre des spires peut alors être compris entre 10 à 20 mm.

La couche intermédiaire 3 peut être réalisée en mousse de matière plastique (PVC, silicones, polyéthylène), de densité pouvant par exemple varier de 1 à 1,25 mm.

Comme précédemment indiqué, l'épaisseur de cette couche intermédiaire 3 est égale à $\frac{1}{3}$ à $\frac{1}{2}$ du diamètre des spires des ressorts 5, de sorte que les spires ne se trouvent qu'en partie enrobées dans la mousse de matière plastique.

L'élément de garniture précédemment décrit présente de nombreux avantages, tant au point de vue du confort qu'en ce qui concerne la résistance à la lacération:

— tout d'abord, en raison de l'épaisseur relativement importante de la couche de couverture 1 et de la multiplicité des sommets des spires des ressorts 5 venant en contact avec cette couche de couverture 1, l'utilisateur, en s'asseyant ne ressentira pas la présence des ressort 5;
— en outre, lors d'une tentative de lacération, l'objet tranchant qui aura tout d'abord une grande difficulté à pénétrer dans la couche de couverture 1 en raison de sa dureté et de son épaisseur, sera ensuite stoppé par le réseau continu de ressorts 5 qui vient affleurer contre la face inférieure 2 de la couche de couverture 1.

En conséquence, il n'atteindra que très légèrement la mousse de matière plastique 3. En aucun cas, la fente pratiquée ne pourra ensuite se propager d'elle-même. Au contraire, cette fente se refermera naturellement grâce à la flexibilité de la nappe de ressorts et de la couverture de sorte que la tentative de lacération n'aura aucune conséquence grave, nécessitant une réparation ou un remplacement de la garniture.

On notera que la couche de PVC constituant la couverture 1 peut être avantageusement ignifugée, ce qui confère, en raison de son épaisseur, une très bonne résistance à l'incendie de l'ensemble de la garniture (bien entendu, la couche intermédiaire 3 pourra, elle aussi, être ignifugée).

En cas de rupture d'une des spires métalliques constituant le réseau 4, l'extrémité de cette spire rompue ne pourra que très difficilement traverser la couche superficielle, ce qui élimine le risque de blesser un usager.

On rappelle que dans les exemples représentés figures 1 et 2, la nappe de ressorts 4 est constituée par une pluralité de ressorts hélicoïdaux 5 à axes parallèles et sensiblement dans un même plan. Les spires de chacun des ressorts 5 se trouvent entremêlées avec les spires des deux ressorts 5 qui lui sont adjacents. L'entremêlement de ces spires est obtenu en faisant tourner chacun de ces ressorts 5 autour de son axe de manière à ce qu'il vienne s'engager dans les spires des ressorts qui lui sont adjacents (action analogue à celle d'un vissage).

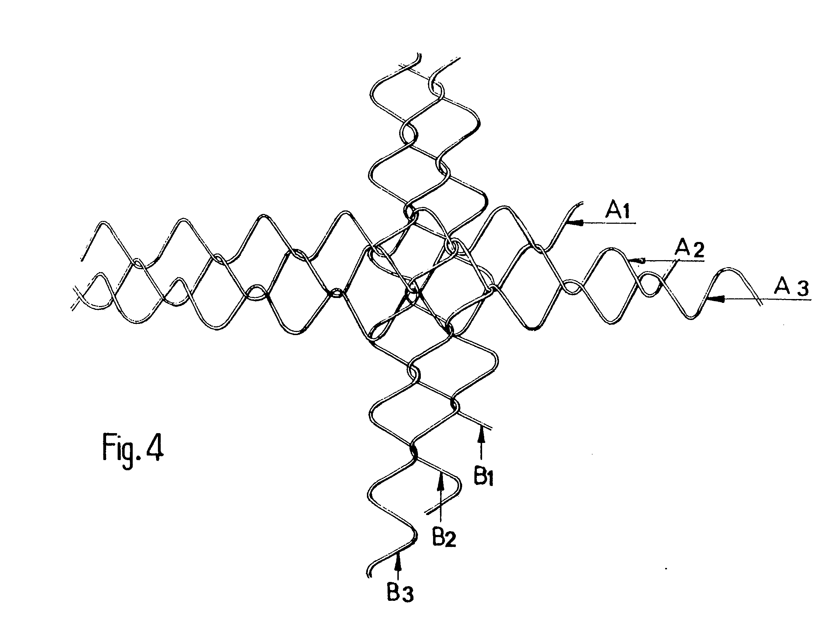

La nappe représentée figure 3 est quant à elle obtenue en entremêlant deux nappes de ressorts du type de celle précédemment décrite, les axes des ressorts de la première nappe étant perpendiculaire aux axes des ressorts de la seconde nappe. On constate que ce double entremêlement permet d'accentuer, vue de dessus, la configuration en damiers.

La figure 4 permet d'illustre le principe de ce double entremêlement. Dans cette figure, pour plus de clarté, la première nappe n'est constituée que par trois ressorts entremêlés A1, A2, A3 tandis que la seconde nappe axée perpendiculairement à la première, n'est constituée que par les ressorts B1, B2, B3. A l'intersection de ces deux nappes, on retrouve la configuration en damiers accentués représentée figure 3.

Il convient de rappeler que les figures 3 et 4 sont des vues de dessus (dans un plan) et ne permettent pas de faire ressortir le relief des ressorts hélicoïdaux qu'il ne faut pas confondre avec des ressorts plats.

Comme précédemment mentionné, l'élément de garniture selon l'invention peut en outre comprendre, adhérant sur la face supérieure de la couche de couverture, un revêtement en tissu, de préférence en laine et, entre la couche de couverture et la couche intermédiaire de liaison, une nappe intercalaire en tissu 6 de fibres de verre 7 d'épaisseur de préférence égale à 6/10ème de mm environ. Le revêtement et la nappe intercalaire ont été représentés en traits interrompus sur les figures 1 et 2.

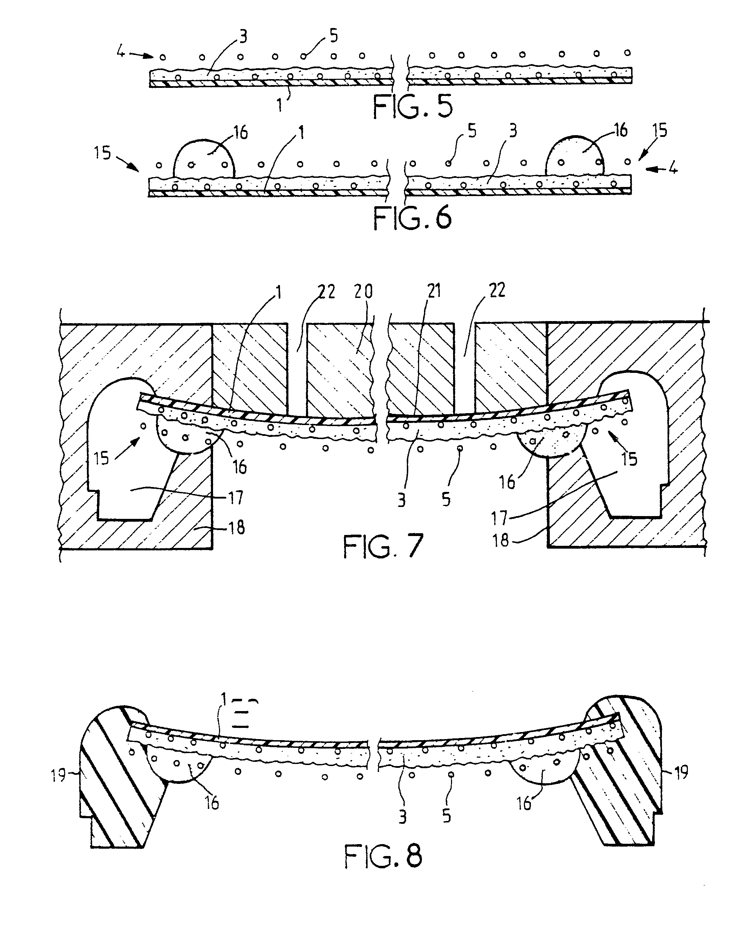

Comme précédemment mentionné, la première phase du procédé de réalisation d'un élément de siège selon l'invention consiste en la découpe (figure 5) d'un élément de garniture tel que ceux représentés par exemple sur les figures 1 et 3.

La deuxième phase du procédé consiste à couler, (figure 6) à proximité de la bordure périphérique 15 de l'élément de garniture, du côté de la nappe de ressorts 5, un cordon en matière plastique 16 présentant des propriétés d'élasticité. Ce cordon 16 vient enrober la partie extérieure des spires de la nappe de ressorts 5 dans la zone correspondante et vient adhérer sur la couche intermédiaire 3 en mousse de matière plastique.

La troisième phase consiste à engager la bordure périphérique 15 à l'intérieur de la cavité 17 d'un moule 18 de forme correspondante dont la cavité présente une section correspondant à celle du cadre 19 que l'on désire réaliser. Parallèlement, on galbe la garniture en la maintenant appliquée, par sa couverture 1, sur une matrice 20 présentant la forme 21 désirée. A cet effet, la matrice comprend une pluralité de perçages 22 raccordés à un générateur de vide (non représenté). L'élément de garniture se trouve donc aspiré sur la matrice 20 et, grâce à sa flexibilité, épouse la forme 21 de cette matrice 20 (figure 7).

Dans cette position, on coule ou on injecte dans le moule 18 la matière plastique destinée à réaliser le cadre 19. Cette matière plastique vient enrober la bordure périphérique 15 de l'élément de garniture, y compris l'extrémité de la nappe de ressorts 5. On obtient ainsi un excellent ancrage.

La dernière phase du procédé consiste en le démoulage de l'élément de siège, une fois que la matière plastique formant le cadre 19 s'est solidifiée. En raison de la rigidité de ce cadre 19, l'élément de garniture conserve la forme précontrainte fournie par la matrice 20.

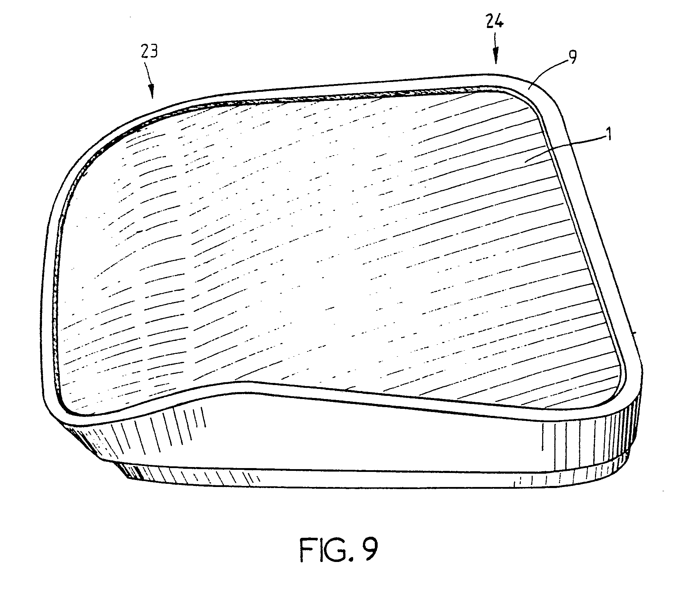

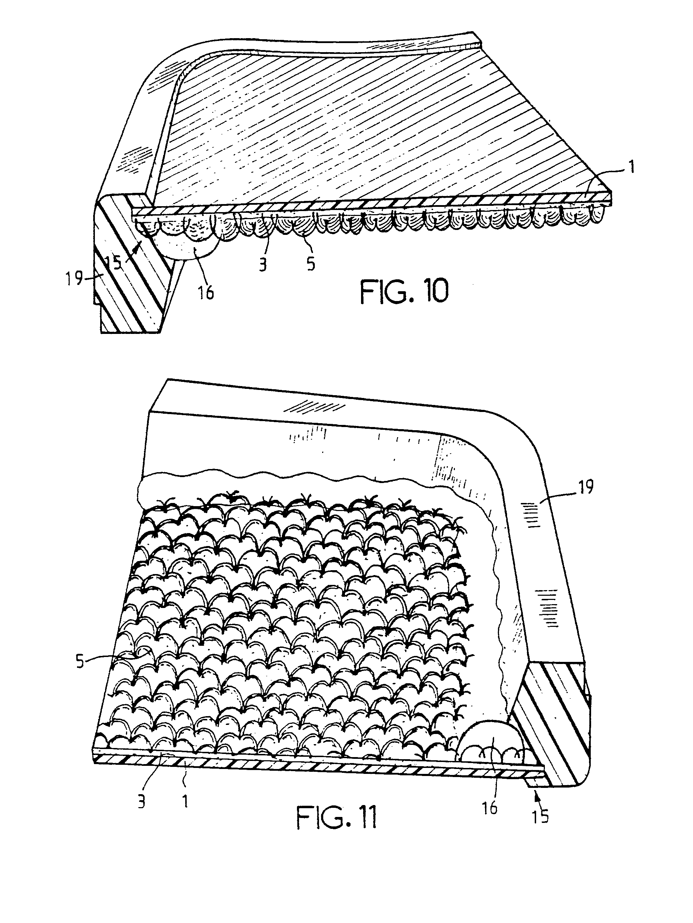

Le procédé selon l'invention permet donc d'obtenir des éléments de siège tel que, par exemple, celui représenté figures 9 à 11.

Dans cet élément de siège, l'élément de garniture présente, naturellement, à l'arrière 23 une forme légèrement bombée et, à l'avant 24, une forme plane ou légèrement concave. Grâce aux propriétés mécaniques de cette garniture, cette forme se conservera, même après utilisation.

**Revendications**

1. Procédé pour la réalisation d'un élément de siège ou analogue à l'aide d'une garniture comprenant au moins, une couche de couverture en matière plastique (1) relativement compacte, un réseau formé par une nappe continue de ressorts métalliques (5), en spirale, dont les axes sont parallèles à la couche de couverture (1) et dont les spires entremêlées viennent, d'un côté, sensiblement affleurer contre la face inférieure de la couverture (1), et une couche intermédiaire de liaison (3) entre la couche de couverture (1) et la nappe de ressorts (5), cette couche étant réalisée en une mousse de matière plastique adhérant d'un côté à la face inférieure de la couche de couverture (1) et venant, en partie, enrober les spires de la nappe de ressorts (5), procédé caractérisé en ce qu'il comprend les opérations suivantes:

— La découpe de la garniture;
— Le depôt, à une légère distance de la bordure périphérique (15 de la garniture), du côté où ressort la nappe de ressorts (5) d'un cordon en matière plastique (16) possédant des propriétés d'élasticité, ce cordon venant adhérer sur la couche intermédiaire en mousse de matière plastique (3), et venant enrober, en la dépassant, la partie de la nappe de ressorts (5) sortant de ladite couche intermédiaire (3);
— La mise en place de la bordure périphérique (15) de la garniture dans un moule périphérique (18), ce moule (18) présentant une cavité dans laquelle pénètre ladite bordure (15), l'étanchéité entre la garniture et le moule (18) étant assurée, d'un côté, par le contact de la paroi du moule (18) avec la face extérieure de la garniture, et, de l'autre côté, par le contact de la paroi du moule (18) sur le cordon d'étanchéité (16), et
— Le coulage ou l'injection d'une matière plastique convenablement choisie à l'intérieur du moule.

2. Procédé selon la revendication 1, caractérisé en ce que, ou cours des phases de mise en place et de moulage, on exerce sur la garniture une contrainte en vue de lui conférer, en jouant sur sa flexibilité, une forme prédéterminée.

3. Procédé selon la revendication 2, caractérisé en ce que la susdite forme prédéterminée est obtenue en maintenant la couverture (1) plaquée sur une matrice (20) présentant une forme (21) correspondante.

4. Procédé selon la revendication 3, caractérisé en ce que le maintien de la garniture sur la matrice (20) s'effectue par aspiration.

5. Procédé selon l'une des revendications précédentes, caractérisé en ce que le susdit réseau est formé par une nappe de ressort (5) métalliques en spirale présentant un diamètre de 10 à 20 mm et réalisés à partir de fils de 0,5 à 1,5 mm de diamètre et en ce que les spires des ressorts (5) se trouvent enrobées dans la couche intermédiaire (3) en mousse de matière plastique sur $\frac{1}{3}$ à $\frac{1}{2}$ de leur diamètre.

6. Procédé selon l'une des revendications précédentes, caractérisé en ce que la garniture comprend en outre un revêtement en tissu (8) recouvrant la face supérieure de la couche de couverture (1).

7. Procédé pour la réalisation d'un élément de siège ou analogue selon l'une des revendications 1 à 5, à l'aide d'une garniture comportant:

a) une couche de couverture (1) en matière plastique compacte, relativement épaisse, cette couche présentant une faible élasticité dans son plan mais une bonne flexibilité élastique;

b) un réseau (4) formé par une nappe continue de ressorts (5) métalliques en spirale (hélicoïdaux) dont les axes sont parallèles à la couche de couverture (1) en matière plastique compacte, et dont les spires sont entremêlées les unes avec les autres de manière à obtenir, vue en plan, une structure en forme de damiers à mailles très peu extensibles, les spires desdits ressorts venant d'un côté sensiblement affleurer contre la face inférieure de la couche de couverture (1);

c) une couche intermédiaire (3) de liaison entre la couche de couverture (1) et la nappe de ressorts (4), cette couche étant réalisée en mousse de matière plastique d'épaisseur inférieure au diamètre des spires des ressorts (5) de ladite nappe et adhérant d'un côté, sur la face inférieure de la couche de matière plastique compacte (1) et venant en partie enrober les spires de la nappe de ressorts (5), sur une fraction de l'épaisseur de la nappe de ressorts, caractérisé en ce que la réalisation dudit élément de garniture comprend les étapes suivantes:

d) on coule à température ambiante sur un moule la couche compacte de couverture (1), par exemple en PVC, la face de moulage du moule pouvant présenter en relief un dessin;

e) on prépolymérise la couche de couverture dans un four, à une température de l'ordre de 180° pendant une durée de l'ordre de 3 à 5 mm, puis on laisse refroidir de manière à obtenir un abaissement de la température de la matière d'environ 50°C, par exemple de 120° à 70°C;

f) on coule ensuite, à la température ambiante, la couche de liaison (3), par exemple avec un mélange de PVC et d'agent d'expansion;

g) on pose sur la couche de liaison liquide la nappe continue de ressorts (5), la nappe de ressorts (5) s'enfonçant dans la couche de liaison (3) jusqu'à ce qu'elle atteigne la couche de couverture qui a été prépolymérisée et qui est, de ce fait, plus dure;

h) on polymérisé ensuite les deux couches de matière plastique dans un four à une température d'environ 180° et pendant une durée d'environ 25 mm;

i) on défourne et on laisse refroidir à température ambiante avant de manipuler la garniture;

j) on découpe ensuite les éléments de garniture aux formes et aux dimensions requises.

8. Procédé selon la revendication 7, caractérisé en ce que la face de moulage du moule est initialement recouverte d'un tissu.

9. Procédé pour la réalisation d'un élément de siège ou analogue selon l'une des revendications 1 à 6, à l'aide d'une garniture comportant:

a) une couche de couverture (1) en matière plastique compacte, relativement épaisse, cette couche (1) présentant une faible élasticité dans son plan mais une bonne flexibilité élastique;

b) un réseau (4) formé par une nappe continue de ressorts (5) métalliques en spirale (hélicoïdaux) dont les axes sont parallèles à la couche de couverture (1) en matière plastique compacte, et dont les spires sont entremêlées les unes avec les autres de manière à obtenir, vue en plan, une structure en forme de damiers à mailles très peu extensibles, les spires desdits ressorts (5) venant d'un côté sensiblement affleurer contre la face inférieure de la couche de couverture;

c) une couche intermédiaire de liaison (3) entre la couche de couverture (1) et la nappe de ressorts (5), cette couche (3) étant réalisée en mousse de matière plastique d'épaisseur inférieure au diamètre des spires des ressorts (5) de ladite nappe (4) et adhérant d'un côté, sur la face inférieure de la couche en matière plastique compacte (1) et venant en partie enrober les spires de la nappe de ressorts (5), sur une fraction de l'épaisseur de la nappe de ressorts (5);

ainsi qu'entre la couche de couverture (1) et la couche de liaison en mousse de matière plastique (3), une nappe intercalaire (7) en tissu de fibres de verre de quelques dixièmes de mm,

caractérisé en ce qu'il comprend les étapes suivantes:

d) on coule à température ambiante la couche de couverture (1), par exemple en PVC ou en élastomère de silicones, la face de moulage du moule pouvant présenter en relief un dessin;

e) on dispose sur cette couche de couverture (1) un tissu intercalaire (7) en fibres de verre;

f) on coule à froid la couche de liaison (3) en matière plastique, (résine mélangée à de l'agent d'expansion);

g) on pose sur cette couche de liaison liquide (3) la nappe continue de ressorts (5), la nappe de ressorts (5) s'enfonçant alors dans la couche de liaison (3) jusqu'à ce qu'elle atteigne le tissu intercalaire (7) en fibre de verre;

h) on polymérise ensuite les deux couches de matière plastique dans un four à une température de 180° et pendant une durée d'environ 25 mm;

i) on défourne et on laisse refroidir à température ambiante avant de manipuler la garniture;

j) on découpe ensuite les éléments de garniture aux formes et aux dimensions requises.

**Patentansprüche**

1. Verfahren zum Herstellen eines Sitzelementes od.dgl. mittels einer Polsterung, welche, zumindest, eine Deckschicht (1) aus relativ kompaktem Kunststoff, ein von metallischen Schraubenfedern (5) mit zur Deckschicht (1) parallel verlaufenden Achsen und mit an einer Seite im wesentlichen an der Unterseite der Deckschicht (1) anliegenden Schraubengängen gebildetes Netz und zwischen der Deckschicht (1) und der vom Netz von Federn (5) gebildeten Lage eine dazwischenliegende Verbindungsschicht (3) aufweist, wobei die letztere Schicht aus einem an der Unterseite der Deckschicht (1) haftenden und die Wendeln der Lage von Federn (5) zum Teil einbettenden Kunststoffschaum gebildet ist, dadurch gekennzeichnet, daß

— die Polsterung zugeschnitten wird, daß
— ein geeignete Elastizität besitzender Kunstoffstrang (16) an der Seite, wo die Lage von Federn (5) auf der Polsterung aufruht, mit geringem Abstand vom Umfangsrand (15) der Polsterung aufgelegt wird, wobei dieser Kunststoffstrang sich mit der aus Kunstoffschaum bestehenden Verbindungsschicht (3) durch Adhäsion verbindet und den von der Verbindungsschicht (3) herausragenden Teil der Lage von Federn (5) einbettet und darüber hinausragt, daß
— der Umfangsrand (15) der Polsterung in eine Umfangsform (18) eingelegt wird, welche einen Hohlraum aufweist, in welchen der Umfangsrand (15) hineinragt, wobei der dichte Abschluß zwischen der Polsterung und der Umfangsform (18) einerseits durch Anlage der Wandung der Form (18) an der Außenfläche der Polsterung und anderseits durch Anlage der Wandung der Form (18) am abdichtenden Kunststoffstrang (16) zustandekommt, und daß

— in das Innere der Form ein in geeigneter Weise ausgewählter Kunststoff eingegossen oder eingespritzt wird.

2. Verfahren nach Anspruch 1, dadurch gekennzeichnet, daß während der Arbeitsgänge des Einlegens und des Formens auf die Polsterung eine Kraft ausgeübt wird, um ihr unter Ausnützung ihrer Flexibilität eine vorbestimmte Gestalt zu geben.

3. Verfahren nach Anspruch 2, dadurch gekennzeichnet, daß die erwähnte vorbestimmte Gestalt dadurch erhalten wird, daß die Deckschicht (1) auf einer eine entsprechende Form (21) besitzenden Matrize (20) angelegt gehalten wird.

4. Verfahren nach Anspruch 3, dadurch gekennzeichnet, daß die Polsterung auf der Matrize (20) durch Ansaugen gehalten wird.

5. Verfahren nach einem der vorhergehenden Ansprüche, dadurch gekennzeichnet, daß das erwähnte Netz von einer Lage metallischer Schraubenfedern gebildet ist, die einen Wendeldurchmesser von 10 bis 20 mm besitzen und aus Drähten mit einem Durchmesser von 0,5 bis 1,5 mm hergestellt worden sind, und daß die Wendeln der Federn (5) in der aus Kunststoffschaum bestehenden Verbindungsschicht (3) über 1/3 bis 1/2 ihres Durchmessers eingebettet sind.

6. Verfahren nach einem der vorhergehenden Ansprüche, dadurch gekennzeichnet, daß die Polsterung weiters eine die Oberseite der Deckschicht (1) bedeckende Auflage aus einem Gewebe (8) aufweist.

7. Verfahren zum Herstellen eines Sitzelementes od.dgl. nach einem der Ansprüche 1 bis 5 mittels einer Polsterung, welche

(a) eine Deckschicht (1) aus Kunststoff, welche Deckschicht relativ starkwandig ist und in ihrer Ebene eine geringe Elastizität besitzt und eine gute elastische Flexibilität besitzt,

(b) ein von einer kontinuierlichen Lage von metallischen Schraubenfedern (5) (helicoidale Federn) gebildetes Netz (4), wobei die Achsen der Schraubenfedern parallel zur Deckschicht aus dichtem Kunststoff verlaufen, die Wendeln der Schraubenfedern miteinander solcherart vermascht sind, daß in Draufsicht eine Schachbrettstruktur mit nur sehr wenig dehnbaren Maschen entsteht, und die Wendeln dieser Federn an einer Seite im wesentlichen an der Unterseite der Deckschicht (1) anliegen, und

(c) zwischen der Deckschicht (1) und der Lage von Federn (5) eine dazwischenliegende Verbindungsschicht (3) aus Kunststoffschaum mit einer den Durchmesser der Wendeln der Federn (5) unterschreitenden Dicke, wobei die Verbindungsschicht mit einer Seite auf der Unterseite der Deckschicht (1) aus kompaktem Kunststoff haftet und die Wendeln der Lage der Federn (5) über einen Bruchteil der Dicke der Federlage einbettet, aufweist, dadurch gekennzeichnet, daß die Herstellung des erwähnten Polsterungselementes die folgenden Arbeitsgänge umfaßt:

(d) man gießt bei Raumtemperatur auf eine Form die kompakte Deckschicht (1), beispielsweise aus PVC, wobei die Formfläche der Form ein Reliefmuster besitzen kann,

(e) die Deckschicht wird in einem Ofen bei einer Temperatur in der Größenordnung von 180°C während einer Zeit in der Größenordnung von 3 bis 5 min vorpolymerisiert, worauf solcherart abkühlen gelassen wird, daß sich für das Material eine Temperaturerniedrigung von etwa 50°C, beispielsweise von 120°C auf 70°C, ergibt,

(f) anschließend wird bei Raumtemperatur die Verbindungsschicht (3), beispielsweise aus einem Gemisch von PVC und einem Treibmittel, gegossen,

(g) auf die flüssige Verbindungsschicht wird die durchgehende Lage von Federn (5) aufgelegt, wobei die Lage von Federn (5) in die Verbindungsschicht (3) einsinkt bis sie die zuvor vorpolymerisierte und deshalb härtere Deckschicht erreicht,

(h) anschließend werden die zwei Kunststoffschichten in einem Ofen bei einer Temperatur von etwa 180°C während einer Zeit von etwa 25 min polymerisiert,

(i) es wird dem Ofen entnommen und vor Handhabung der Polsterung auf Umgebungstemperatur abkühlen gelassen,

(j) anschließend werden die Polsterungselemente auf die gewünschte Gestalt und die gewünschten Abmessungen zugeschnitten.

8. Verfahren nach Anspruch 7, dadurch gekennzeichnet, daß die Formfläche der Form zunächst mit einem Gewebe bedeckt wird.

9. Verfahren zum Herstellen eines Sitzelementes od.dgl. nach einem der Ansprüche 1 bis 6 mittels einer Polsterung, welche

(a) eine Deckschicht (1) aus Kunststoff, welche Deckschicht (1) relativ starkwandig ist und in ihrer Ebene eine geringe Elastizität besitzt und eine gute elastische Flexibilität besitzt,

(b) ein von einer kontinuierlichen Lage von metallischen Schraubenfedern (5) (helicoidale Federn) gebildetes Netz (4), wobei die Achse der Schraubenfedern parallel zur Deckschicht aus dichtem Kunststoff verlaufen, die Wendeln der Schraubenfedern miteinander solcherart vermascht sind, daß in Draufsicht eine Schachbrettstruktur mit nur sehr wenig dehnbaren Maschen entsteht und die Wendeln dieser Federn (5) an einer Seite im wesentlichen an der Unterseite der Deckschicht anliegen,

(c) zwischen der Deckschicht (1) und der Lage von Federn (5) eine dazwischenliegende Verbindungsschicht (3) aus Kunststoffschaum mit einer den Durchmesser der Wendeln der Federn (5) in der Federlage (4) unterschreitenden Dicke, wobei die Verbindungsschicht mit einer Seite an der Unterseite der Deckschicht (1) aus kompaktem Kunststoff haftet und die Wendeln der Lage der Federn (5) über einen Bruchteil der Dicke der Lage der Federn (5) einbettet, und weiters zwischen der Deckschicht (1) und der Verbindungsschicht (3) aus Kunststoffschaum eine Zwischenschicht (7) aus Glasfasergewebe mit einer Stärke von einigen Zehntel mm aufweist,

dadurch gekennzeichnet, daß es die folgenden Arbeitsgänge umfaßt:

(d) bei Raumtemperatur wird die Deckschicht (1), beispielsweise aus PVC oder aus einem Siliconelastomeren, auf die Formfläche der Form gegossen, welche ein Reliefmuster aufweisen kann,

(e) auf diese Deckschicht wird eine Zwischenschicht (7) aus Glasfasergewebe aufgelegt,

(f) in der Kälte wird die Verbindungsschicht (3) aus Kunststoff (ein mit Treibmittel vermischtes Harz) gegossen,

(g) auf diese flüssige Verbindungsschicht (3) wird die durchgehende Lage von Federn (5) aufgelegt, wobei die Lage von Federn (5) in der Folge in die Verbindungsschicht (3) einsinkt, bis sie die Zwischenschicht (7) aus Glasfasergewebe erreicht,

(h) anschließend werden die zwei Kunststoffschichten in einem Ofen bei einer Temperatur von 180°C während einer Dauer von etwa 25 min polymerisiert,

(i) es wird dem Ofen entnommen und vor dem Handhaben der Polsterung auf Umgebungstemperatur abkühlen gelassen,

(j) anschließend werden die Polsterungselemente zur gewünschten Form und auf die gewünschten Abmessungen zugeschnitten.

**Claims**

1. A process for producing a seat element or the like using an upholstery means comprising at least a cover layer (1) of plastics material which is relatively compact, a network formed by a continuous layer of metal springs (5), in spiral configuration, the axes of which are parallel to the cover layer (1) and the interlaced turns of which, on one side, are substantially in a level position against the bottom face of the cover (1), and an intermediate connecting layer (3) between the cover layer (1) and the layer of springs (5), said intermediate layer being made of a plastics foam which adheres on one side to the bottom face of the cover layer (1) and partially enclosing the turns of the layer of springs (5), the process being characterised in that it comprises the following operations:

— cutting out the upholstery means;
— depositing at a small distance from the peripheral edge (15) of the upholstery means, on the side where the layer of springs (5) issues, a strip (16) of plastics material having elastic properties, said strip adhering to the intermediate layer of plastics foam (3) and enclosing, while passing beyond same, the part of the layer of springs (5) extending from said intermediate layer (3);

— positioning of the peripheral edge (15) of the upholstery means in a peripheral mould (18), said mould (18) having a cavity into which said edge (15) extends, a sealing relationship between the upholstery means and the mould (18) being effected on the one hand by contact of the wall of the mould (18) with the outside face of the upholstery means and on the other hand by contact of the wall of the mould (18) with the sealing strip (16), and

— casting or injecting a suitably selected plastics material into the interior of the mould.

2. A process according to claim 1 characterised in that, in the course of the positioning and moulding phases, a force is applied to the upholstery means in order to impart a predetermined shape thereto, by acting on the flexibility thereof.

3. A process according to claim 2 characterised in that said predetermined shape is obtained by holding the cover (1) in contact against a die (20) of a corresponding shape (21).

4. A process according to claim 3 characterised in that the upholstery means is held against the die (20) by suction.

5. A process according to one of the preceding claims characterised in that said network is formed by a layer of metal springs (5) of spiral configuration, having a diameter of from 10 to 20 mm and produced from wires of a diameter of from 0.5 to 1.5 mm, and that the turns of the springs (5) are enclosed in the intermediate layer (3) of plastics foam over a third to a half of their diameter.

6. A process according to one of the preceding claims characterised in that the upholstery means further comprises a fabric covering (8) covering the top face of the cover layer (1).

7. A process for producing a seat element or the like according to one of claims 1 to 5, using an upholstery means comprising:

a) a relatively thick cover layer (1) of compact plastics material, said layer having a low degree of elasticity in the plane thereof but good elastic flexibility;

b) a network (4) formed by a continuous layer of metal springs (5) of spiral configuration (helicoidal) whose axes are parallel to the compact plastics material cover layer (1) and whose turns are interlaced with each other so as to produce in plan view a structure in the form of checks with meshes which are very little extensible, the turns of said springs on one side coming to lie substantially level against the bottom face of the cover layer (1);

c) an intermediate connecting layer (3) between the cover layer (1) and the layer of springs (4), said intermediate layer being made of plastics material foam which is less in thickness than the diameter of the turns of the springs (5) of said layer of springs and which adheres on one side to the bottom face of the compact plastics material layer (1) and partially enclosing the turns of the layer of springs (5) over a fraction of the thickness of the layer of springs, characterised in that the production of said upholstery element comprises the following steps:

d) the compact cover layer (1) for example of PVC is cast at ambient temperature on a mould, wherein the moulding face of the mould may have a design in relief;

e) the cover layer is prepolymerised in an oven at a temperature of the order of 180° for a period of the order of from 3 to 5 mn, then it is left to cool so as to produce a reduction in the temperature of the material of about 50°C, for example from 120 to 70°C;

f) the connecting layer (3) is then cast at ambient temperature, for example with a mixture of PVC and swelling agent;

g) the continuous layer of springs (5) is disposed on the liquid connecting layer, the layer of springs (5) penetrating into the connecting layer (3) until it reaches the cover layer which has been prepolymerised and which is accordingly harder;

h) the two layers of plastics material are then polymerised in an oven at a temperature of about 180° and for a period of about 25 mn;

i) the material is removed from the oven and left to cool to ambient temperature before handling the upholstery means;

j) the upholstery elements are then cut to the required shapes and dimensions.

8. A process according to claim 7 characterised in that the moulding face of the mould is initially covered with a fabric.

9. A process for producing a seat element or the like according to one of claims 1 to 6 using an upholstery means comprising:

a) a relatively thick cover layer (1) of compact plastics material, said layer having a low degree of elasticity in the plane thereof but good elastic flexibility;

b) a network (4) formed by a continuous layer of metal springs (5) of spiral configuration (helicoidal) whose axes are parallel to the compact plastics material cover layer (1) and whose turns are interlaced with each other so as to produce in plan view a structure in the form of checks with meshes which are very little extensible, the turns of said springs (5) on one side coming to lie substantially level against the bottom face of the cover layer;

c) an intermediate connecting layer (3) between the cover layer (1) and the layer of springs (5), said intermediate layer being made of plastics material foam which is less in thickness than the diameter of the turns of the springs (5) of said layer of springs and which adheres on one side to the bottom face of the compact plastics material layer (1) and partially enclosing the turns of the layer of springs (5) over a fraction of the thickness of the layer of springs (5);

and between the cover layer (1) and the plastics material foam connecting layer (3) an interposed layer (7) of fabric of glass fibres of a few tenths of mm, characterised in that it comprises the following steps:

d) the cover layer (1) is moulded at ambient temperature, for example comprising PVC or a silicone elastomer, wherein the moulding face of the mould may have a design in relief;

e) an interposed fabric (7) of glass fibres is disposed on said cover layer (1);

f) the connecting layer (3) of plastics material (resin mixed with swelling agent) is cold moulded;

g) the continuous layer of springs (5) is disposed on said liquid connecting layer (3), the layer of springs (5) then penetrating into the connecting layer (3) until it reaches the interposed glass fibre fabric (7);

h) the two layers of plastics material are then polymerised in an oven at a temperature of 180° and for a period of about 25 mn;

i) the material is removed from the oven and it is left to cool to ambient temperature before the upholstery means is handled;

j) the upholstery elements are then cut to the required shapes and dimensions.

Fig.1

Fig. 3

Fig.2

A 3

A2

A1

B1

B2

B3

Fig. 4

3

FIG. 5

FIG. 6

FIG. 7

FIG. 8

FIG. 9

FIG. 10

FIG. 11